# FASCICULE DE BREVET EUROPEEN

(11) **EP 2 481 936 B1**
(45) Date de publication et mention de la délivrance du brevet: **16.08.2017**
(21) Numéro de dépôt: 12305082.5
(22) Date de dépôt: 24.01.2012
(51) Int. Cl.: F16B 5/02, F16L 23/032, F01D 25/24, F02C 7/04, B64D 29/00

(54) **Dispositif de liaison plus particulierement adapté pour assurer la liaison entre une entrée d'air et une motorisation d'une nacelle d'aéronef**
Speziell angepasste Verbindungsvorrichtung zur Sicherstellung der Verbindung zwischen einem Lufteinlass und einer Motorisierung einer Luftfahrzeuggondel
Linking device more specifically suited to providing the link between an air intake and an engine of an aircraft nacelle

(30) Priorité: 26.01.2011 FR 1150609
(43) Date de publication de la demande: 01.08.2012
(73) Titulaire: Airbus Opérations SAS, 31060 Toulouse (FR); Rolls-Royce plc, London SW1E 6AT (GB)
(72) Inventeur: Porte, Alain, 31770 COLOMIERS (FR); Dida, Stéphane, 31470 FONTENILLES (FR); Marro, Martial, 31830 PLAISANCE DU TOUCH (FR); Reed, Julian, DERBY, DE24 8BJ (GB); Wattam, David, DERBY, DE24 8BJ (GB); Woodward, Colin, DERBY, DE24 8BJ (GB); Halliday, Caroline, DERBY, DE65 5LB (GB)
(74) Mandataire: Fantin, Laurent

(56) Documents cités:
- WO-A2-2010/001009
- DE-C1- 4 407 728
- US-A- 4 471 979

## Description

La présente invention se rapporte à un dispositif de liaison plus particulièrement adapté pour assurer la liaison entre une entrée d'air et une motorisation d'une nacelle d'aéronef.

Un ensemble propulsif d'aéronef comprend une nacelle dans laquelle est disposée de manière sensiblement concentrique une motorisation reliée par l'intermédiaire d'un mât au reste de l'aéronef.

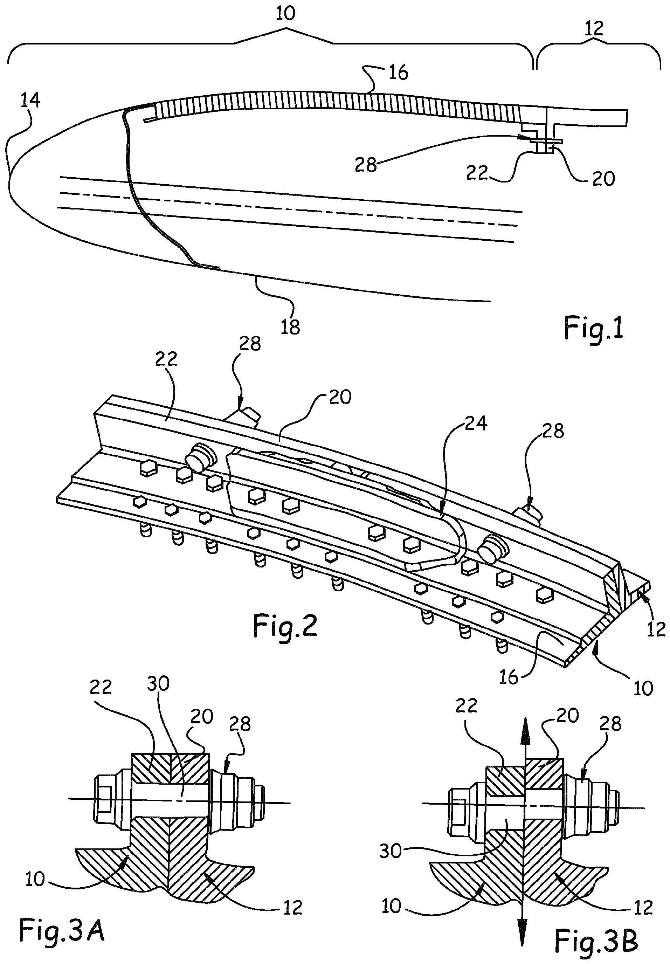

Comme illustré sur la figure 1, la nacelle comprend à l'avant une entrée d'air 10 permettant de canaliser un flux d'air en direction de la motorisation 12, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation.

L'entrée d'air 10 comprend une lèvre 14 dont la surface en contact avec les flux aérodynamiques est prolongée à l'intérieur de la nacelle par un conduit intérieur 16 de sections sensiblement circulaires et à l'extérieur de la nacelle par une paroi extérieure 18 de sections sensiblement circulaires.

L'entrée d'air 10 est reliée à la motorisation 12 par un dispositif de liaison illustré en détails sur les figures 2, 3A et 4A. Ce dispositif de liaison comprend au niveau de la motorisation une première collerette annulaire 20 solidarisée à une seconde collerette annulaire 22 d'un panneau délimitant le conduit 16 ou d'une pièce intercalaire 24, appelée bride, reliée au panneau délimitant le conduit 16, comme illustré sur la figure 2. Les deux collerettes 20 et 22 sont plaquées l'une contre l'autre et maintenues ainsi par des éléments de liaison 28, par exemple des boulons ou des rivets, qui traversent les collerettes 20, 22 et s'étendent parallèlement à l'axe longitudinal de la nacelle.

Selon un premier mode de réalisation illustré sur la figure 3A, les boulons ou rivets 28 comprennent une tige 30 dont le diamètre peut être ajusté à celui des trous de passage ménagés dans les collerettes annulaires 20 et 22.

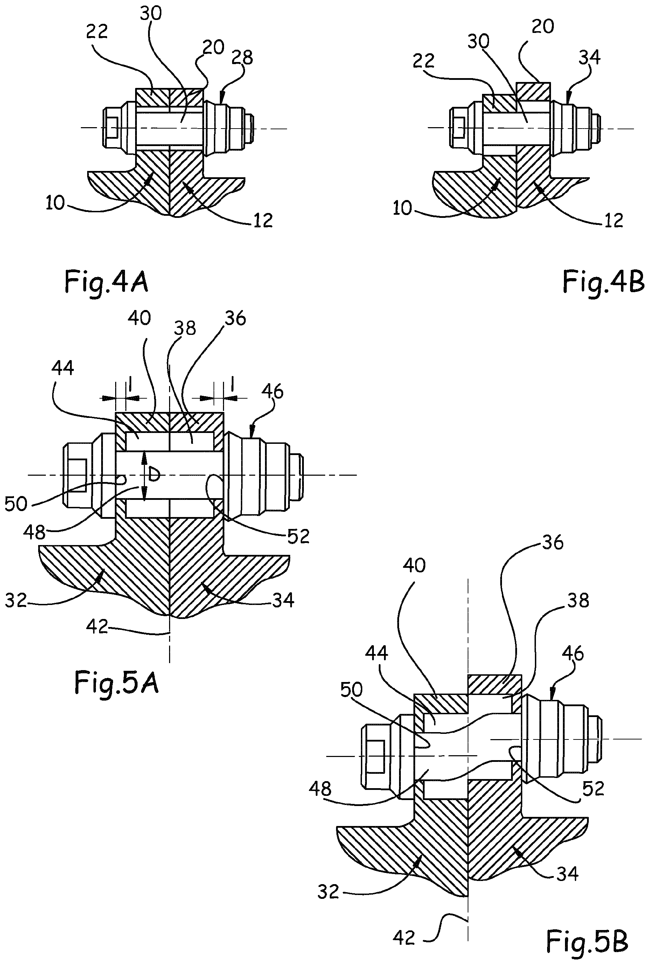

Selon un second mode de réalisation illustré sur la figure 4A, le diamètre des trous de passage ménagés dans les collerettes annulaires 20 et 22 peut être légèrement supérieur à celui de la tige 30 des boulons ou rivets 28. Ce jeu entre les trous de passage et les boulons ou rivets 28 autorise un mouvement relatif entre les deux éléments reliés.

Dans les deux cas, les trous de passage sont cylindriques.

Le dispositif de liaison et plus particulièrement les boulons ou rivets 28 sont dimensionnés pour pallier aux éventuels risques d'incidents, comme par exemple le bris d'une pâle de la soufflante.

Dans ce cas, le conduit de la motorisation peut se déformer sur toute sa périphérie. Lors de ces déformations, les trous de passage de la collerette annulaire de la motorisation ne sont plus disposés au droit de ceux de l'entrée d'air, comme illustré sur les figures 3B et 4B. Dans cette configuration, les boulons ou rivets 28 subissent notamment des contraintes de cisaillement relativement importantes, nettement supérieures aux contraintes subies en fonctionnement normal. Même si le second mode de réalisation autorise un mouvement relatif entre les deux pièces reliées en raison du jeu présent autour des boulons ou rivets 28, ce jeu est nettement inférieur au mouvement relatif entre les deux pièces reliées en cas d'incident comme le bris d'une pâle. Dans le cas du second mode de réalisation avec jeu, on constate que les contraintes de cisaillement sont au moins égales à celles présentes pour le premier mode de réalisation voire supérieures.

Pour résister à de telles contraintes, le dispositif de liaison comprend un nombre donné de boulons ou rivets 28 avec un diamètre donné.

Compte tenu de la résistance d'un boulon ou rivet 28 dans un montage conforme aux modes de réalisation illustrés sur les figures 3A et 4B, cela conduit à prévoir pour le dispositif de liaison un grand nombre de boulons ou rivets 28 et/ou des boulons ou rivets 28 avec un diamètre important, ce qui engendre une masse embarquée plus importante et par conséquent une consommation énergétique plus importante de l'aéronef.

Les documents DE4407728, US4471979 et WO2010001009 décrivent chacun un assemblage entre deux pièces qui comprend des trous de passage et des éléments de jonction logés dans les différents trous de passage. Pour les deux pièces, les trous de passage débouchent au niveau d'un plan de jonction avec des arêtes vives qui génèrent des contraintes de cisaillement, sur les éléments de jonction en cas de déformation.

Aussi, la présente invention vise à proposer un dispositif de liaison plus particulièrement adapté pour relier une motorisation et une entrée d'air d'une nacelle d'aéronef optimisé permettant de réduire la masse embarquée.

A cet effet, l'invention a pour objet un dispositif de liaison entre deux conduits reliés au niveau d'un plan de jonction, plus particulièrement adapté pour relier une entrée d'air et une motorisation d'une nacelle d'aéronef, ledit dispositif de liaison comportant au niveau des conduits à relier une pluralité de trous de passage perpendiculaires au plan de jonction et débouchant au niveau du plan de jonction, disposés au droit les uns des autres et des éléments de liaison logés dans les trous de passage, comportant chacun une tige avec à chaque extrémité des appuis permettant de maintenir plaquées lesdites pièces, caractérisé en ce que lesdits trous de passage comprennent pour chacun au moins une section réduite et ajustée à la tige de l'élément de liaison à proximité de l'appui correspondant**, lesdits trous de passage ayant une forme évasée et un rayon de courbure R1** au niveau du plan de jonction de manière à ce que ladite tige ne subisse que de très faibles efforts de cisaillement au niveau du plan de jonction lors de la déformation relative des conduits.

Selon l'invention, le dispositif de liaison entre l'entrée d'air et la motorisation peut absorber une partie de l'énergie produite lors d'un bris de pâle par exemple par déformation plastique et élastique dudit dispositif de liaison. De plus, grâce aux formes géométriques des trous de passage, les éléments de liaison ont une plus grande résistance. Ceci permet de limiter le nombre et/ou le surdimensionnement des éléments de liaison, et donc la masse embarquée, en réduisant sensiblement les contraintes de cisaillement subies par lesdits éléments de liaison.

D'autres caractéristiques et avantages ressortiront de la description qui va suivre de l'invention, description donnée à titre d'exemple uniquement, en regard des dessins annexés sur lesquels :
- la figure 1 est une coupe schématique selon un plan radial d'une partie de l'avant d'une nacelle d'aéronef,
- la figure 2 est une vue en perspective illustrant une partie d'une liaison entre un moteur et une entrée d'air d'une nacelle d'aéronef selon l'art antérieur,
- la figure 3A est une coupe illustrant un élément de liaison entre un moteur et une entrée d'air d'une nacelle d'aéronef selon un premier mode de réalisation de l'art antérieur,
- la figure 3B est une coupe illustrant l'élément de liaison de la figure 3A subissant des contraintes de cisaillement,
- la figure 4A est une coupe illustrant un élément de liaison entre un moteur et une entrée d'air d'une nacelle d'aéronef selon un second mode de réalisation de l'art antérieur,
- la figure 4B est une coupe illustrant l'élément de liaison de la figure 4A subissant des contraintes de cisaillement,
- la figure 5A est une coupe illustrant un élément de liaison entre un moteur et une entrée d'air d'une nacelle d'aéronef selon **un mode de réalisation ne faisant pas partie de l'invention,**
- la figure 5B est une coupe illustrant l'élément de liaison de la figure **5A** lors d'une déformation,
- la figure 6A est une coupe illustrant un élément de liaison entre un moteur et une entrée d'air d'une nacelle d'aéronef selon une première variante de l'invention,
- la figure 6B est une coupe illustrant l'élément de liaison de la figure 6A lors d'une déformation,
- la figure 7A est une coupe illustrant un élément de liaison entre un moteur et une entrée d'air d'une nacelle d'aéronef selon une deuxième variante de l'invention,
- la figure 7B est une coupe illustrant des détails de la figure 7A,
- la figure 8A est une coupe illustrant un élément de liaison entre un moteur et une entrée d'air d'une nacelle d'aéronef selon unie troisième variante de l'invention,
- la figure 8B est une coupe illustrant des détails de la figure 8A,
- la figure 9 est une coupe illustrant un élément de liaison entre un moteur et une entrée d'air d'une nacelle d'aéronef selon une autre variante,
- les figures 10 à 13 sont des coupes illustrant des variantes de profils de trous de passage,
- la figure 14 est une coupe illustrant en détails un élément de liaison selon une variante de l'invention, et
- la figure 15 est une coupe illustrant en détails un élément de liaison selon une autre variante de l'invention.

Sur les figures 5A, 5B, 6A, 6B, 7A, 7B, 8A, 8B et 9, on a représenté en coupe la zone de jonction entre une entrée d'air 32 et une motorisation 34 d'une nacelle d'aéronef.

Selon un mode de réalisation, le dispositif de liaison entre une motorisation et une entrée d'air comprend au niveau de la motorisation une collerette annulaire 36 s'étendant dans un plan sensiblement perpendiculaire à l'axe longitudinal de la nacelle et comportant une pluralité de trous de passage 38, au niveau de l'entrée d'air une collerette annulaire 40 s'étendant dans un plan sensiblement perpendiculaire à l'axe longitudinal de la nacelle, plaquée contre la collerette annulaire 36 de la motorisation au niveau d'un plan de jonction référencé 42 et comportant une pluralité de trous de passage 44 disposés au droit des trous de passage 38 de la motorisation et des éléments de liaison 46 répartis sur la périphérie des collerettes annulaires 36 et 40 logés dans les trous de passage 38 et 44.

Selon les cas, une collerette annulaire peut être réalisée d'un seul tenant avec la motorisation ou l'entrée d'air ou se présenter sous la forme d'une bride reliée à la motorisation ou l'entrée d'air.

Bien que décrit appliqué à la liaison entre une entrée d'air et une motorisation d'une nacelle d'aéronef, le dispositif de liaison peut être utilisé pour relier deux conduits dont la liaison peut être sollicitée par des efforts radiaux.

Chaque élément de liaison 46 comprend une tige 48 sous forme d'un cylindre avec à une première extrémité un premier appui 50 susceptible d'être plaqué contre la face libre d'une des collerettes, à l'occurrence la collerette annulaire 40 de l'entrée d'air, et à l'autre extrémité un second appui 52 susceptible d'être plaqué contre la face libre de l'autre collerette, à l'occurrence la collerette annulaire 36 de la motorisation.

Selon un mode de réalisation, un élément de liaison 46 peut se présenter sous la forme d'un boulon, avec d'une part une vis comportant une tige avec à une première extrémité une tête (correspondant au premier appui 50) et à l'autre extrémité un filetage, et d'autre part un écrou (correspondant au second appui 52) se vissant à l'extrémité de la vis.

En variante, l'élément de liaison peut se présenter sous la forme d'un rivet avec une tige comportant à une première extrémité une tête formant un premier appui 50 et dont l'autre extrémité est déformée de manière à former le second appui 52.

La tige 48 de l'élément de liaison a un diamètre D déterminé en fonction des contraintes subies essentiellement en traction.

Contrairement à l'art antérieur pour lequel les éléments de liaison sont dimensionnés pour résister aux contraintes dont les plus critiques sont les contraintes de cisaillement en raison d'un non alignement des trous de passage par exemple lors d'un bris de pâle, l'invention vise à proposer un dispositif de liaison permettant d'absorber par déformation plastique et élastique une partie de l'énergie produite lors du choc de la pâle contre le conduit de la motorisation. Ceci permet de limiter le nombre et/ou le surdimensionnement des éléments de liaison, et donc la masse embarquée, en réduisant sensiblement les contraintes de cisaillement subies par lesdits éléments de liaison.

A cet effet, selon l'invention, les trous de passage 38 et 44 ne sont pas cylindriques mais comprennent pour chacun au moins une section ajustée à la tige 48 de l'élément de liaison à proximité de l'appui 50 ou 52 correspondant et une section avec un jeu important au niveau du plan de jonction 42.

Par une section ajustée, on entend que le diamètre du trou de passage 38 ou 44 est égal au diamètre de la tige 48 ou compris dans un intervalle de tolérance de +/- 1 mm.

Selon l'invention, la tige de guidage est parfaitement guidée au niveau des appuis 50 et 52 et peut se déformer au niveau du plan de jonction 42.

Cet agencement permet aux éléments de liaison 46 d'absorber par déformation plastique et/ou élastique une partie de l'énergie produite lors du choc de la pâle contre le conduit de la motorisation. De plus, la tige 48 est soumise à des contraintes en cisaillement moins importantes que selon l'art antérieur si bien qu'il est possible de réduire le nombre et/ou le diamètre des éléments de liaison 46.

Selon un mode de réalisation ne faisant pas partie de l'invention illustré sur les figures 5A et 5B, pour chaque collerette 36, 40, le trou de passage 44, 38 comprend une portée avec une section ajustée à celle de la tige 48 sur une distance l s'étendant depuis la surface libre en contact avec un des appuis 50 et 52, l étant inférieure à 1/3 de la longueur totale du trou de passage 38, 44. Sur le reste de l'épaisseur de la collerette 36, 40, le trou de passage 38 et 44 a un diamètre largement supérieur à celui de la tige 48. Par largement supérieur, on entend que le diamètre du trou de passage 38, 44 a une valeur supérieure à D+10%, D étant le diamètre de la tige 48.

De préférence, les trous de passage 38 et 44 ont une forme évasée en direction du plan de jonction 42.

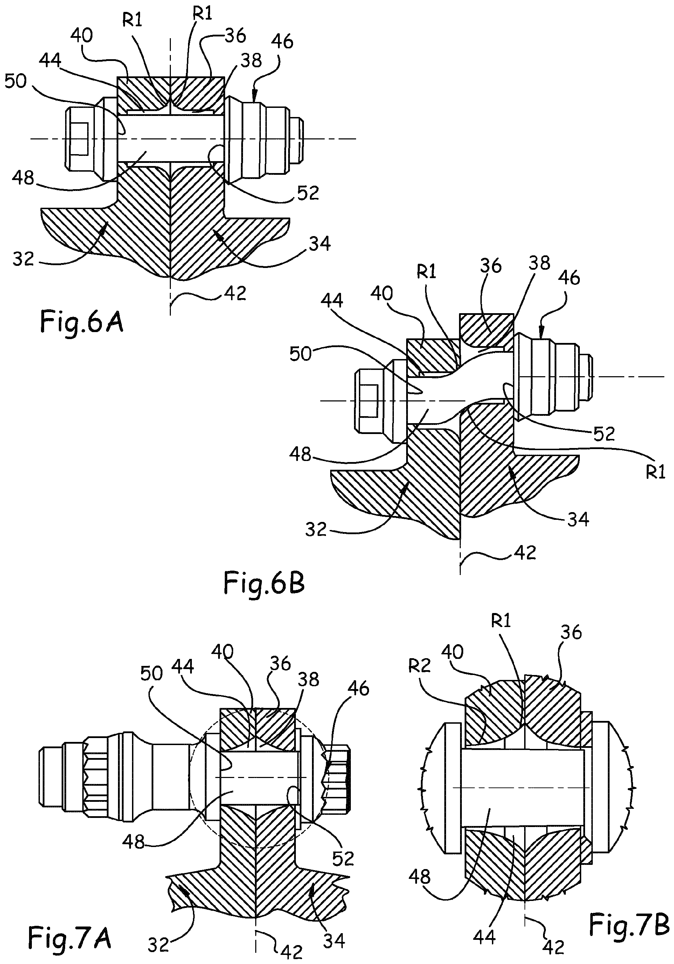

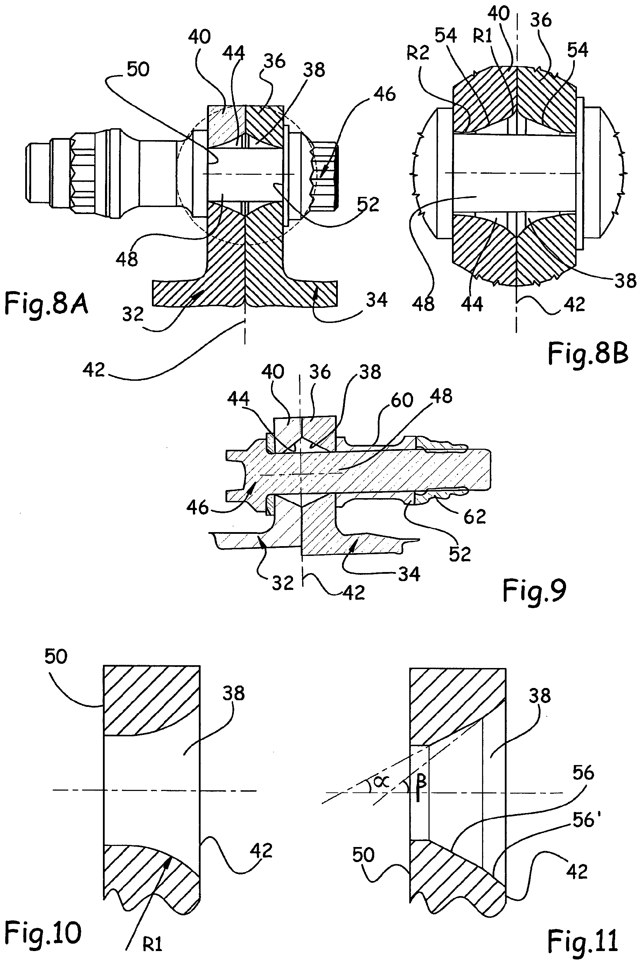

Selon une première variante illustrée sur les figures 6A, 6B et 10, les trous de passage 38 et 44 débouchent au niveau du plan de jonction 42 par des formes évasées présentant un rayon de courbure R1 au niveau du plan de jonction 42. Comme illustré sur la figure 6B, ce rayon de courbure R1 permet d'augmenter la résistance à la rupture de la tige 48. Lors de la déformation de la tige 48, il apparait un phénomène d'écrouissage lorsque ladite tige vient en contact avec la forme arrondie R1.

Selon la variante illustrée sur la figure 10, le rayon de courbure R1 est tel que sa tangente au niveau des appuis 50 ou 52 est parallèle à l'axe de la tige 48.

Selon une autre amélioration illustrée sur les figures 7A et 7B, les trous de passage 38 et 44 ont une section qui s'évase progressivement jusqu'au plan de jonction 42. En plus de présenter un rayon de courbure R1 au niveau du plan de jonction, les trous de passage 38 et 44 présentent chacun un rayon de courbure R2 après la section la plus réduite.

Cette configuration permet de réduire les contraintes de cisaillement ce qui tend à augmenter la résistance à la rupture de la tige 48.

De préférence, comme illustré sur les figures 8A et 8B, le rayon R2 est inférieur au rayon R1.

Avantageusement, entre les rayons R1 et R2, les génératrices des trous de passage comprennent une portion sensiblement rectiligne 54.

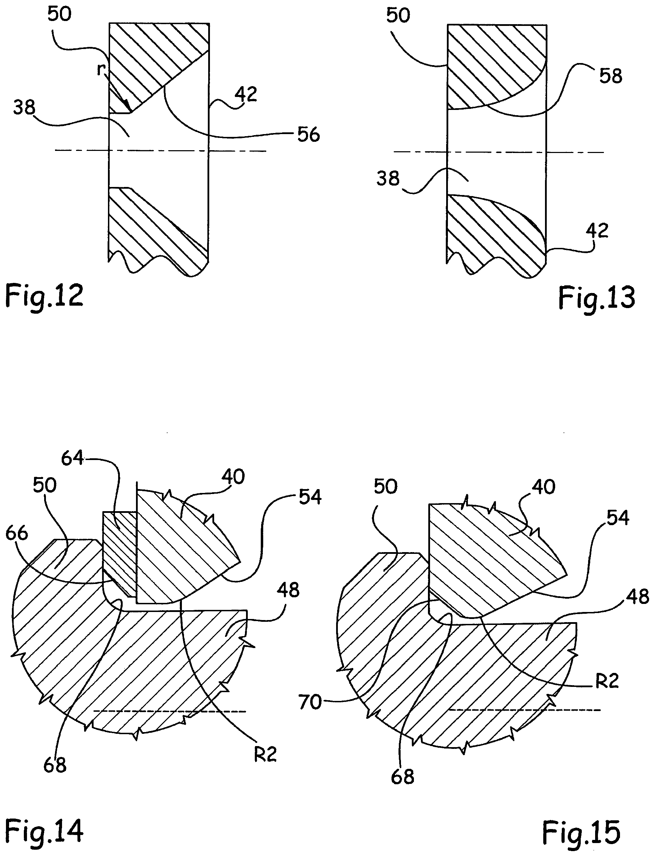

Selon une autre variante illustrée sur les figures 9, 11 et 12, le trou de passage 38 ou 44 comprend au moins une forme tronconique évasée en direction du plan de jonction 42. Selon une variante **ne faisant pas partie de l'invention,** illustrée sur la figure 12, le trou de passage 38 ou 44 comprend une seule portion tronconique 56 évasée en direction du plan de jonction 42 qui est reliée à la portion ajustée par une arête vive ou de préférence par un rayon de courbure. Selon une variante **ne faisant pas partie de l'invention,** illustrée sur la figure 11, le trou de passage 38 ou 44 comprend au moins deux portions tronconiques 56, 56' évasées en direction du plan de jonction 42. La première portion tronconique 56, la plus proche de l'appui 50 ou 52, forme un angle a avec l'axe du trou de passage et la seconde portion tronconique 56', la plus proche du plan de jonction 42 un angle β.

De préférence, l'angle β est supérieur à l'angle α, les portions tronconiques s'évasant de plus en plus à proximité du plan de jonction 42. Selon les cas, les portions tronconiques sont reliées par des arêtes vives et/ou par des rayons de courbure.

Selon une autre variante illustrée sur la figure 13, le trou de passage 38 ou 44 peut avoir un profil 58 de forme sensiblement elliptique, à savoir une tangente au niveau du plan d'appui parallèle à l'axe du trou de passage et une tangente au niveau du plan de jonction 42 perpendiculaire à l'axe du trou de passage.

Selon l'invention, le profil des trous de passage peut comprendre une combinaison de courbes qui s'évasent en direction du plan de jonction 42.

Comme illustré notamment sur la figure 9, au moins un fourreau déformable 60 peut être enfilé sur la tige 48 et interposé entre l'une des collerettes et l'un des appuis. Selon l'exemple illustré, le fourreau déformable 60 est intercalé entre la collerette annulaire 36 de la motorisation et l'appui 52 formé par un écrou 62 de l'élément de liaison. Ce fourreau déformable 60 a un diamètre intérieur ajusté à celui de la tige 48 et comprend en partie centrale une épaisseur relativement faible de manière à suivre la courbure de la tige lors de sa déformation. Cet agencement permet d'augmenter l'énergie absorbée par déformation du dispositif de liaison.

Comme illustré sur la figure 14, une rondelle 64 peut être enfilée sur la tige 48 et intercalée entre l'appui 50 (ou 52) de l'élément de liaison et la collerette annulaire 40 de l'entrée d'air (ou la collerette de la motorisation 36). Avantageusement, les formes de la rondelle 64 sont adaptées pour obtenir un effet de rotule entre l'appui 50 (ou 52) de l'élément de liaison et la collerette annulaire 40 (ou 36).

Selon un autre mode de réalisation illustré sur la figure 14, la rondelle 64 comprend une face plane en regard de la collerette annulaire 40 (ou de la collerette 36) et au niveau de son trou de passage un chanfrein 66. En complément, l'appui 50 et la tige 48 de l'élément de liaison sont reliés par un rayon de courbure 68.

Selon un mode de réalisation illustré sur la figure 15, la partie terminale du trou de passage 38 ou 44 orientée vers la face libre de la collerette peut comprendre une forme arrondie ou chanfreinée 70. Selon ce mode de réalisation, le trou de passage 38 ou 44 a un diamètre qui diminue sur 1 à 2 mm puis qui augmente jusqu'au plan de jonction comme illustré sur la figure 11.

## Revendications

1. Dispositif de liaison entre deux pièces reliées au niveau d'un plan de jonction (42), plus particulièrement adapté pour relier une entrée d'air et une motorisation d'une nacelle d'aéronef, ledit dispositif de liaison comportant au niveau des pièces à relier une pluralité de trous de passage (38, 44) perpendiculaires au plan de jonction et débouchant au niveau du plan de jonction (42), disposés au droit les uns des autres et des éléments de liaison (46) logés dans les trous de passage (38, 44), comportant chacun une tige (48) avec à chaque extrémité des appuis (50, 52) permettant de maintenir plaquées lesdites pièces à relier, **caractérisé en ce que** lesdits trous de passage (38, 44) comprennent pour chacun au moins une section réduite et ajustée à la tige (48) de l'élément de liaison à proximité de l'appui (50, 52) correspondant, lesdits trous de passage (38, 44) ayant une forme évasée et un rayon de courbure R1 au niveau du plan de jonction (42) de manière à ce que ladite tige (48) ne subisse que de très faibles efforts de cisaillement au niveau du plan de jonction lors de la déformation relative des pièces assemblées.

2. Dispositif de liaison selon la revendication 1, **caractérisé en ce que** les trous de passage (38, 44) présentent chacun dans le prolongement de la section réduite dans la direction du plan de jonction (42) un rayon de courbure R2.

3. Dispositif de liaison selon la revendication 2, **caractérisé en ce que** le rayon de courbure R2 est inférieur au rayon de courbure R1.

4. Dispositif de liaison selon l'une quelconque des revendications 1 à 3, **caractérisé en ce que** les trous de passage (38, 44) comprennent au moins une forme tronconique évasée en direction du plan de jonction (42).

5. Dispositif de liaison selon la revendication 4, **caractérisé en ce que** les trous de passage (38, 44) comprennent au moins deux portions tronconiques (56, 56') qui s'évasent de plus en plus à proximité du plan de jonction (42).

6. Dispositif de liaison selon l'une quelconque des revendications 1 à 5, **caractérisé en ce que** chaque trou de passage (38, 44) comprend une portée avec une section ajustée à celle de la tige (48) sur une distance 1 inférieure à 1/3 de la longueur totale du trou de passage (38, 44).

7. Dispositif de liaison selon l'une quelconque des revendications 1 à 6, **caractérisé en ce que** les trous de passage (38, 44) ont un diamètre qui diminue sur 1 à 2 mm puis qui augmente de l'appui (50, 52) jusqu'au plan de jonction (42).

8. Nacelle d'aéronef comprenant une entrée d'air reliée au niveau d'un plan de jonction (42) à une motorisation par un dispositif de liaison selon l'une quelconque des revendications 1 à 7.

## Patentansprüche

1. Verbindungsvorrichtung zwischen zwei im Bereich einer Verbindungsebene (42) verbundenen Teilen, die insbesondere dazu eingerichtet ist, einen Lufteinlass und eine Motorisierung einer Gondel eines Luftfahrzeugs zu verbinden, wobei die Verbindungsvorrichtung im Bereich der verbindenden Teile eine Vielzahl von Durchführungen (38, 44) aufweist, die rechtwinklig zur Verbindungsebene ausgerichtet sind, die im Bereich der Verbindungsebene (42) münden und die einander gegenüberliegend angeordnet sind, und Verbindungselemente (46) aufweist, die in den Durchführungen (38, 44) ruhen und jeweils einen Schaft (48) aufweisen, der an den Enden jeweils über eine Auflage (50, 52) verfügt, die es gestattet, die zu verbindenden Teile zusammenzuhalten, **dadurch gekennzeichnet, dass** die Durchführungen (38, 44) jeweils wenigstens einen verringerten Querschnitt aufweisen, der an den Schaft (48) des Verbindungselements in der Nähe der entsprechenden Auflage (50, 52) angepasst ist, wobei die Durchführungen (38, 44) eine sich erweiternde Form und einem Krümmungsradius R1 im Bereich der Verbindungsebene (42) aufweisen, so dass auf diese Weise der Schaft (48) nur sehr geringe Scherbelastungen im Bereich der Verbindungsebene bei einer relativen Verformung der zusammengesetzten Teile ausgesetzt ist.

2. Verbindungsvorrichtung nach Anspruch 1, **dadurch gekennzeichnet, dass** die Durchführungen (38, 44) jeweils in der Verlängerung des verringerten Querschnitts in Richtung der Verbindungsebene (42) einen Krümmungsradius R2 aufweisen.

3. Verbindungsvorrichtung nach Anspruch 2, **dadurch gekennzeichnet, dass** der Krümmungsradius R2 kleiner als der Krümmungsradius R1 ist.

4. Verbindungsvorrichtung nach einem der Ansprüche 1 bis 3, **dadurch gekennzeichnet, dass** die Durchführungen (38, 44) in Richtung der Verbindungsebene (42) kegelstumpfförmig erweitert ausgestaltet sind.

5. Verbindungsvorrichtung nach Anspruch 4, **dadurch gekennzeichnet, dass** die Durchführungen (38, 44) wenigstens zwei kegelstumpfförmige Abschnitte (56, 56') aufweisen, die sich in der Nähe der Verbindungsebene (42) mehr und mehr erweitern.

6. Verbindungsvorrichtung nach einem der Ansprüche 1 bis 5, **dadurch gekennzeichnet, dass** die Durchführungen (38, 44) jeweils über eine Entfernung 1, die kleiner als 1/3 der Gesamtlänge der Durchführung (38, 44) ist, eine Auflagefläche mit einem Querschnitt aufweisen, der an denjenigen des Schaftes (48) angepasst ist.

7. Verbindungsvorrichtung nach einem der Ansprüche 1 bis 6, **dadurch gekennzeichnet, dass** die Durchführungen (38, 44) einen Durchmesser haben, der sich auf 1 bis 2 mm verringert und von der Auflage (50, 52) bis zur Verbindungsebene (42) hin ansteigt.

8. Gondel eines Luftfahrzeugs mit einem Lufteinlass, der im Bereich einer Verbindungsebene (42) durch eine Verbindungsvorrichtung nach einem der Ansprüche 1 bis 7 mit einer Motorisierung verbunden ist.

## Claims

1. Connecting device between two parts that are connected at a junction plane (42), more particularly suited for connecting an air intake and a power plant of an aircraft nacelle, said connecting device comprising at the parts to be connected a large number of through holes (38, 44) that are perpendicular to the junction plane and that empty out at the junction plane (42), arranged facing one another and connecting elements (46) housed in the through holes (38, 44), each comprising a rod (48) with supports (50, 52) at each end that make it possible to keep said parts to be connected flattened, **characterized in that** said through holes (38, 44) comprise for each at least one small cross-section that is adjusted to the rod (48) of the connecting element close to the corresponding support (50, 52), said through holes (38, 44) comprising a tapered shape and a curvature radius R1 at the junction plane (42) in such a way that said rod (48) only undergoes very weak shear forces at the junction plane during the relative deformation of the assembled parts.

2. Connecting device according to Claim 1, wherein the through holes (38, 44) each have a curvature radius R2 in the extension of the small cross-section in the direction of the junction plane (42).

3. Connecting device according to Claim 2, wherein the curvature radius R2 is less than the curvature radius R1.

4. Connecting device according to any of Claims 1 to 3, wherein the through holes (38, 44) comprise at least one truncated shape that is tapered in the direction of the junction plane (42).

5. Connecting device according to Claim 4, wherein the through holes (38, 44) comprise at least two truncated portions (56, 56') that are increasingly tapered close to the junction plane (42).

6. Connecting device according to any of Claims 1 to 5, wherein each through hole (38, 44) comprises a bearing with a cross-section that is adjusted to that of the rod (48) over a distance 1 that is less than 1/3 of the total length of the through hole (38, 44).

7. Connecting device according to any of Claims 1 to 6, wherein the through holes (38, 44) have a diameter that decreases over 1 to 2 mm and then increases from the support (50, 52) up to the junction plane (42).

8. Aircraft nacelle that comprises an air intake that is connected at a junction plane (42) to a power plant by a connecting device according to any of Claims 1 to 7.
